# EUROPEAN PATENT SPECIFICATION

(11) **EP 3 071 647 B1**
(45) Date of publication and mention of the grant of the patent: **26.09.2018**
(21) Application number: 14864114.5
(22) Date of filing: 04.11.2014
(51) Int. Cl.: C08L 69/00, C08J 5/10

(54) **GLASS-FIBRE REINFORCED POLYCARBONATE COMPOSITION**
GLASFASERVERSTÄRKTE POLYCARBONATZUSAMMENSETZUNG
COMPOSITION DE POLYCARBONATE RENFORCÉE PAR FIBRES DE VERRE

(30) Priority: 22.11.2013 WO PCT/CN2013/087646
(43) Date of publication of application: 28.09.2016
(73) Proprietor: Covestro Deutschland AG, 51373 Leverkusen (DE); Covestro Polymers (China) Co. Ltd, Caojing, 201507 Shanghai (CN)
(72) Inventor: ERKELENZ, Michael, 47239 Duisburg (DE); KUHLMANN, Timo, 42799 Leichlingen (DE); WANG, Leith, Shanghai 200436 (CN); REN, Yu, Shanghai 200129 (CN)
(74) Representative: Levpat
(86) International application number: PCT/CN2014/090218
(87) International publication number: WO 2015/074488

(56) References cited:
- EP-A2- 0 758 003
- WO-A1-01/42362
- WO-A1-2013/079630
- JP-A- 2007 070 468
- JP-A- 2007 070 468
- KR-B1- 101 328 296
- US-A1- 2007 072 995
- US-A1- 2007 072 995

## Description

The present invention relates to glass-fibre reinforced polycarbonate compositions with high stiffness and with improved thermal and rheological behaviour in combination with improved flame-retardancy properties specifically in relation to extremely thin-walled components with wall thickness ≤ 1.00 mm.

The present invention further relates to the use of the inventive compositions for the production of mouldings, such as thin-walled housing parts or switch boxes in the EE (electrical/electronics) and IT (information technology) sector.

These moulding compositions are particularly suitable for components which, at wall thickness from 1.0 mm to 0.75 mm, meet the requirements for the fire-protection classification UL 94 VI, preferably V0. The inventive moulding compositions must moreover have an adequately high melt volume flow rate ≥ 20 g /10 min for 260°C and 5 kg.

Glass-fibre-reinforced polycarbonate compositions are well known from the prior art. However, none of the polycarbonate compositions described meets the requirements of the fire-protection classification UL 94 VI, preferably V0 for wall thicknesses ≤ 1.00 mm, preferably ≤ 0.75 mm, with adequate processability of the compositions in shaping processes, this being determined via the melt volume flow rate (MVR).

US 20130131241 A describes a flame-retardant thermoplastic composition with good flame-retardant effect for low wall thicknesses, while flow properties, impact resistance and modulus of elasticity are simultaneously good. Polymer compositions comprising a polycarbonate, a flame retardant, talc, glass fibres and an acid stabilizer in synergistic quantities are described. The glass-fibre-reinforced polycarbonate compositions described in that document comprise only small quantities of flame retardant based on perfluoroalkylsulphonates, and also small quantities of glass fibres.

JP 2007-070468 A describes glass-fibre-reinforced and flame-retardant resin compositions which, by virtue of the use of a flat glass fibre, and also of another additional lamellar material, provide not only good mechanical stability but also low anisotropy, good flowability, and also an advantageous flame-retardant effect. The use of SAN in the glass-fibre-reinforced polycarbonate compositions improves flow, and this gives markedly improved processability. The use of SAN also raises the brittleness of the resultant mouldings. There is no description of the use of ethylene-alkyl acrylate copolymers in glass-fibre-reinforced polycarbonate compositions as alternatives to SAN.

US 20090048389 A describes glass-fibre-reinforced polycarbonate compositions with good flow behaviour and excellent toughness comprising polyethylene-alkyl acrylate copolymers. That document provides no information about the fire behaviour of the glass-fibre-reinforced polycarbonate compositions described. The use of fire-protection additives in order to achieve a specific fire-protection classification related to the wall thickness of a moulding is not one of the topics covered. Furthermore, the polyethylene-alkyl acrylate copolymers used do not lead to glass-fibre-reinforced polycarbonate compositions that are sufficiently flowable to produce mouldings with low wall thicknesses ≤ 1mm, preferably ≤ 0.75 mm, since the selected melt flow rate of the copolymer is too small.

EP 758003 A describes polycarbonate compositions comprising an inorganic filler selected from the group of glass fibres, carbon fibres, talc, clay and mica, and also comprising an additional material based on a phosphoric ester; these compositions feature improved surface quality and high modulus. There is no description of the use of polyethylene-alkyl acrylate copolymers in glass-fibre-reinforced polycarbonate compositions for the control of flow behaviour and of impact resistance.

US 20070072995 A discloses thermoplastic compositions and use thereof as injection-moulded items for the production of housings or of electronic components. Thermoplastic compositions comprise one or more polycarbonates, an ethylene-alkyl (meth)acrylate copolymer, a rubber-modified vinyl block polymer, and also an unmodified vinyl polymer; according to that document, these improve impact resistance, flowability and thermal stability. The use of glass fibres for increasing the modulus of elasticity and the use of fire-protection additives for achieving a specific fire-protection classification in relation to the wall thickness of a moulding are not topics that are covered.

US 20110160411 A describes compositions comprising a copolycarbonate that is stable at high temperature, and also at least one ethylene-alkyl acrylate copolymer for the production of injection mouldings and of extruded semifinished products. The use of glass fibers for increasing modulus of elasticity and the use of fire-protection additives for achieving a specific fire-protection classification in relation to the wall thickness of a moulding are not topics that are covered.

WO 2013079630 A describes impact-modified glass-fibre-filled polycarbonate compositions which feature high stiffness, improved thermal and rheological behaviour, and also good fire-protection effect. That document recommends the use of ethylene-alkyl (meth)acrylate copolymers in glass-fibre-reinforced polycarbonate compositions for the electrical/electronics industry. The glass-fibre-reinforced polycarbonate compositions described in that document are unsuitable for processing at low wall thicknesses ≤ 1 mm, preferably ≤ 0.75 mm, because of the flame retardant used, which is based on perfluoroalkylsulphonates, and also the content of that flame retardant. Furthermore, there is no indication of achievement of the fire-protection classification V0 in accordance with UL 94V at wall thicknesses of ≤ 0.75 mm. KR 101 328 296 B1, examples 1-3, discloses compositions comprising:- 53%, 54% or 62% of thermoplastic aromatic polycarbonate, 2% or 4% of ethylene acrylate-based copolymer having a melt flow rate at 190°C of 3 g /10 min, 15% or 20% of glass fiber and 10%, 12% or 14% of bisphenol A diphosphate.

The present invention therefore addressed the problem of providing compositions which have high stiffness and improved thermal and rheological behaviour in combination with an improved fire-protection classification specifically in relation to extremely thin-walled components with wall thickness ≤ 1.00 mm, preferably ≤ 0.75 mm.

Surprisingly, it has now been found that the abovementioned properties are obtained when polycarbonate compositions according to Claim 1 of the present invention are used. The moulding compositions thus constituted feature good mechanical properties, and also good toughness and good rheological and thermal behaviour together with improved flame retardancy for extremely low wall thicknesses.

The present invention therefore provides polycarbonate compositions comprising
A) from 10 to 78 parts by weight, preferably from 15 to 65 parts by weight, particularly preferably from 25 to 60 parts by weight, of at least one aromatic polycarbonate or polyester carbonate,
B) from 15 to 60 parts by weight, preferably from 18 to 55 parts by weight, more preferably from 18 to 50 parts by weight, of at least one glass fibre,
C) from 0.5 to 15 parts by weight, preferably up to 10 parts by weight, more preferably up to 7 parts by weight, of at least one other, preferably lamellar filler,
D) from 5 to 15 parts by weight, preferably from 8 to 14 parts by weight, more preferably from 8 to 12 parts by weight, of at least one phosphorus compound of the general formula (I) 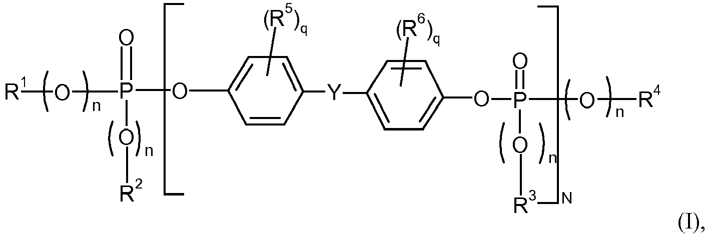 in which
   R¹, R², R³ and R⁴ are respectively mutually independently C₁- to C₈-alkyl and/or optionally alkyl-substituted C₅- to C₆-cycloalkyl, C₆- to C₁₀-aryl or C₇- to C₁₂-aralkyl,
   n is mutually independently 0 or 1, preferably 1,
   q is mutually independently 0, 1, 2, 3 or 4,
   N is a number from 0.1 to 30, preferably from 0.5 to 10, in particular from 0.7 to 5, especially from 1.0 to 3.0, more particularly from 1.05 to 2.00,
   R⁵ and R⁶ are mutually independently C₁-C₄-alkyl, preferably methyl and
   Y is C₁- to C₇-alkylidene, C₁- to C₇-alkylene, C₅- to C₁₂-cycloalkylene, C₅- to C₁₂ cycloalkylidene, -O-, -S-, -SO-, SO₂ or -CO-, preferably isopropylidene, methylene, cyclohexyliden, optionally substituded by one to three methyl groups or a direct bond.
E) 0.5 to 4.5 parts by weight, preferably from 1.0 to 4.2 parts by weight, more preferably from 2.0 to 4.0 parts by weight, of at least one ethylene-alkyl (meth)acrylate copolymer which has a melt flow rate of at least 2.5 g/10 min determined in accordance with ASTM D1238 for 190°C and 2.16 kg,
   where the sum of the parts by weight of components A) to E) is 100 parts by weight and
   with the proviso that the composition comprises at least one lamellar filler where ≥ 4.0 parts by weight of the at least one ethylene-alkyl (meth)acrylate copolymer are contained.

The inventive compositions are moreover characterized in that they pass the UL 94V test at the level VI, preferably at the level V0, for wall thicknesses ≤ 1.00 mm, particularly preferably for wall thicknesses ≤ 0.75 mm.

The inventive moulding compositions are moreover characterized in that they have an adequately high melt volume flow rate greater than 20 g/10 min for 260°C and 5 kg.

### Component A

For the purposes of the present invention, thermoplastic, aromatic polycarbonates are not only homopolycarbonates but also copolycarbonates; as is known, the polycarbonates can be linear or branched polycarbonates.

The average molar masses M_{w} (weight average) of the thermoplastic polycarbonates inclusive of the thermplastic, aromatic polyester carbonates (determined by measuring relative viscosity at 25°C in CH₂Cl₂ and at a concentration of 0.5 g per 100 ml of CH₂Cl₂) are from 20 000 g/mol to 32 000 g/mol, preferably from 23 000 g/mol to 28 000 g/mol, in particular from 24 000 g/mol to 26 000 g/mol.

A portion, up to 80 mol%, preferably from 20 mol% to 50 mol%, of the carbonate groups in the polycarbonates suitable according to the invention can have been replaced by aromatic dicarboxylic ester groups. These polycarbonates which incorporate, into the molecular chain, not only acid moieties from carbonic acid but also acid moieties from aromatic dicarboxylic acids are termed aromatic polyester carbonates. For simplicity, the present application subsumes them within the umbrella term "thermoplastic, aromatic polycarbonates".

The polycarbonates are produced in a known manner from diphenols, carbonic acid derivatives, and optionally chain terminators and optionally branching agents, and production of the polyester carbonates here involves replacing a portion of the carbonic acid derivatives with aromatic dicarboxylic acids or derivatives of the dicarboxylic acids, and specifically in accordance with the extent to which aromatic dicarboxylic ester structural units are intended to replace carbonate structural units in the aromatic polycarbonates.

Dihydroxyaryl compounds suitable for the production of polycarbonates are those of the formula (2)

HO-Z-OH (2)

in which
- Z: is an aromatic moiety which has from 6 to 30 C atoms and which can comprise one or more aromatic rings, and which can have substitution and can comprise aliphatic or cycloaliphatic moieties, respectively, alkylaryl moieties or heteroatoms as bridging members.

It is preferable that Z in formula (2) is a moiety of the formula (3) 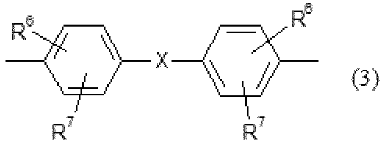 in which
R⁶ and R⁷ are mutually independently H, C₁- to C₁₈-alkyl, C₁- to C₁₈-alkoxy, halogen such as Cl or Br or are respectively optionally substituted aryl or aralkyl, preferably being H or C₁- to C₁₂-alkyl, particularly preferably being H or C₁- to C₈-alkyl and being very particularly preferably H or methyl, and
X is a single bond, -SO₂-, -CO-, -O-, -S-, C₁- to C₆-alkylene, C₂- to Cs-alkylidene or C₅- to C₆-cycloalkylidene, which can have substitution with C₁- to C₆-alkyl, preferably with methyl or ethyl, or else is C₆- to C₁₂-arylene which can optionally have been condensed with further aromatic rings comprising heteroatoms.

It is preferable that X is a single bond, C₁- to C₅-alkylene, C₂- to C₅-alkylidene, C₅- to C₆-cyclo-alkylidene, -O-, -SO-, -CO-, -S-, -SO₂-,
or a moiety of the formula (3a) or (3b) 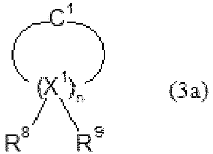 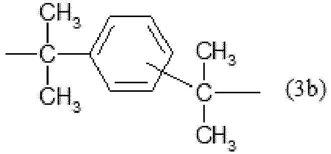 where
R⁸ and R⁹ can be selected individually for each X¹, being mutually independently hydrogen or C₁-to C₆-alkyl, preferably hydrogen, methyl or ethyl and
X¹ is carbon and
n is an integer from 4 to 7, preferably being 4 or 5, with the proviso that on at least one atom X¹, R⁸ and R⁹ are simultaneously alkyl.

Examples of dihydroxyaryl compounds (diphenols) are: dihydroxybenzenes, dihydroxybiphenyls, bis(hydroxyphenyl)alkanes, bis(hydroxyphenyl)cycloalkanes, bis(hydroxyphenyl)aryl compounds, bis(hydroxyphenyl) ethers, bis(hydroxyphenyl) ketones, bis(hydroxyphenyl) sulphides, bis(hydroxyphenyl) sulphones, bis(hydroxyphenyl) sulphoxides, 1,1'-bis(hydroxyphenyl)diisopropylbenzenes, and the ring-alkylated and ring-halogenated compounds related to these.

Examples of diphenols suitable for the production of the polycarbonates to be used in the invention are hydroquinone, resorcinol, dihydroxybiphenyl, bis(hydroxyphenyl)alkanes, bis(hydroxyphenyl)cycloalkanes, bis(hydroxyphenyl) sulphides, bis(hydroxyphenyl) ethers, bis(hydroxyphenyl) ketones, bis(hydroxyphenyl) sulphones, bis(hydroxyphenyl) sulphoxides, α,α'-bis(hydroxyphenyl)diisopropylbenzenes, and also the alkylated, ring-alkylated and ring-halogenated compounds related to these.

Preferred diphenols are 4,4'-dihydroxybiphenyl, 2,2-bis(4-hydroxyphenyl)-1-phenylpropane, 1,1-bis(4-hydroxyphenyl)phenylethane, 2,2-bis(4-hydroxyphenyl)propane, 2,4-bis(4-hydroxyphenyl)-2-methylbutane, 1,3-bis[2-(4-hydroxyphenyl)-2-propyl]benzene (bisphenol M), 2,2-bis(3-methyl-4-hydroxyphenyl)propane, bis(3,5-dimethyl-4-hydroxyphenyl)methane, 2,2-bis(3,5-dimethyl-4-hydroxyphenyl)propane, bis(3,5-dimethyl-4-hydroxyphenyl) sulphone, 2,4-bis(3,5-dimethyl-4-hydroxyphenyl)-2-methylbutane, 1,3-bis[2-(3,5-dimethyl-4-hydroxyphenyl)-2-propyl]benzene and 1,1-bis(4-hydroxyphenyl)-3,3,5-trimethylcyclohexane (bisphenol TMC).

Particularly preferred diphenols are 4,4'-dihydroxybiphenyl, 1,1-bis(4-hydroxy-phenyl)phenylethane, 2,2-bis(4-hydroxyphenyl)propane, 2,2-bis(3,5-dimethyl-4-hydroxy-phenyl)propane, 1,1-bis(4-hydroxyphenyl)cyclohexane and 1,1-bis(4-hydroxyphenyl)-3,3,5-trimethylcyclohexane (bisphenol TMC).

These, and other, suitable diphenols are described by way of example in US-A 2 999 835, 3 148 172, 2 991 273, 3 271 367, 4 982 014 and 2 999 846, in German laid-open applications 1 570 703, 2 063 050, 2 036 052, 2 211 956 and 3 832 396, in French Patent 1 561 518, in the monograph "Chemistry and Physics of Polycarbonates", Interscience Publishers, New York 1964, pp. 28 ff; pp. 102 ff by H. Schnell, and in D.G. Legrand, J.T. Bendler, "Handbook of Polycarbonate Science and Technology", Marcel Dekker, New York 2000, pp. 72 ff.

In the case of the homopolycarbonates, only one diphenol is used, but in the case of copolycarbonates two or more diphenols are used. The diphenols used can, and this also applies to all of the other chemicals and auxiliaries added to the synthesis reaction, have contaminants derived from their own synthesis, handling and storage. However, it is desirable to use raw materials of maximum purity.

The monofunctional chain terminators needed for molecular weight regulation, e.g. phenol or alkylphenols, in particular phenol, p-tert-butylphenol, isooctylphenol, cumylphenol, the carbonyl chloride esters of these or acyl chlorides of monocarboxylic acids, or a mixture of said chain terminators, are introduced to the reaction either with the bisphenolate(s) or else at any desired juncture in the synthesis reaction, as long as phosgene or carbonyl chloride end groups are still present in the reaction mixture, or, in the case of the acyl chlorides and carbonyl chloride esters as chain terminators, as long as sufficient phenolic end groups of the polymer that is being formed are available. However, it is preferable that the chain terminator(s) is/are added after the phosgenation reaction at a location or at a juncture at which no remaining phosgene is present, but before addition of the catalyst; they are added before the catalyst, together with the catalyst, or in parallel therewith.

The same method is used to add, to the synthesis reaction, any branching agents or branching agent mixtures to be used, but they are usually added before the chain terminators. The compounds usually used are trisphenols, quaterphenols or acyl chlorides of tri- or tetracarboxylic acids, or else a mixture of the polyphenols or of the acyl chlorides.

Examples of some of the compounds that can be used as branching agents having three or more than three phenolic hydroxy groups are phloroglucinol, 4,6-dimethyl-2,4,6-tri(4-hydroxyphenyl)hept-2-ene, 4,6-dimethyl-2,4,6-tri(4-hydroxyphenyl)heptane, 1,3,5-tri(4-hydroxyphenyl)benzene, 1,1,1-tri(4-hydroxyphenyl)ethane, tri(4-hydroxyphenyl)phenylmethane, 2,2-bis[4,4-bis(4-hydroxyphenyl)cyclohexyl]propane, 2,4-bis(4-hydroxyphenylisopropyl)phenol and tetra(4-hydroxyphenyl)methane.

Some of the other trifunctional compounds are 2,4-dihydroxybenzoic acid, trimesic acid, cyanuric chloride and 3,3-bis(3-methyl-4-hydroxyphenyl)-2-oxo-2,3-dihydroindole.

Preferred branching agents are 3,3-bis(3-methyl-4-hydroxyphenyl)-2-oxo-2,3-dihydroindole and 1,1,1-tri(4-hydroxyphenyl)ethane.

The quantity of the branching agents that can be used if appropriate is from 0.05 mol% to 2 mol%, again based on a mole of respective diphenols used.

The branching agents can either be used as initial charge in the aqueous alkaline phase with the diphenols and the chain terminators, or can be added prior to phosgenation, after dissolution in an organic solvent.

All of said measures for the production of the polycarbonates are familiar to the person skilled in the art.

Examples of aromatic dicarboxylic acids suitable for the production of the polyester carbonates are orthophthalic acid, terephthalic acid, isophthalic acid, tert-butylisophthalic acid, 3,3'-biphenyldicarboxylic acid, 4,4'-biphenyldicarboxylic acid, 4,4-benzophenonedicarboxylic acid, 3,4'-benzophenonedicarboxylic acid, 4,4'-diphenyl ether dicarboxylic acid, 4,4'-diphenyl sulphone dicarboxylic acid, 2,2-bis(4-carboxyphenyl)propane, and trimethyl-3-phenylindane-4,5'-dicarboxylic acid.

Among the aromatic dicarboxylic acids, terephthalic acid and/or isophthalic acid are particularly preferably used.

Derivatives of the dicarboxylic acids are the diacyl dihalides and the dialkyl dicarboxylates, in particular the diacyl dichlorides and the dimethyl dicarboxylates.

The replacement of the carbonate groups by the aromatic dicarboxylic ester groups takes place in essence stoichiometrically and also quantitatively, and the molar ratio of the reactants is therefore also reflected in the final polyester carbonate. The aromatic dicarboxylic ester groups can be incorporated either randomly or blockwise.

Preferred production methods for the polycarbonates to be used in the invention, inclusive of the polyester carbonates, are the known interfacial process and the known melt transesterification process (cf., for example, WO 2004/063249 A1, WO 2001/05866 A1, WO 2000/105867, US-A 5,340,905, US 5,097,002, US-A 5,717,057).

In the first instance, phosgene and, if appropriate, diacyl dichlorides preferably serve as acid derivatives, and in the latter instance diphenyl carbonate and, if appropriate, dicarboxylic diesters preferably serve as acid derivatives. In both instances, catalysts, solvents, work-up, reaction conditions, etc. for production of polycarbonate or production of the polyester carbonate have been widely described and are well known.

The polycarbonates, polyester carbonates, and polyesters can be worked up in a known manner and processed to give any desired mouldings, for example via extrusion or injection moulding.

The additives that are conventional for these thermoplastics can also be added to the polycarbonate compositions, examples being fillers, UV stabilizers, heat stabilizers, antistatic agents, dyes and pigments, mould-release aids, IR absorbers and flame retardants, in the usual quantities, these generally being up to 5% by weight, preferably from 0.01 to 3% by weight, based on the entire composition.

Examples of suitable additives are described in "Additives for Plastics Handbook", John Murphy, Elsevier, Oxford 1999, and in "Plastics Additives Handbook", Hans Zweifel, Hanser, Munich, 2001.

Examples of suitable antioxidants or heat stabilizers are:
alkylated monophenols, alkylthiomethylphenols, hydroquinones and alkylated hydroquinones, tocopherols, hydroxylated thiodiphenyl ethers, alkylidenebisphenols, O-, N-, and S-benzyl compounds, hydroxybenzylated malonates, aromatic hydroxybenzyl compounds, triazine compounds, acylaminophenols, esters of β-(3,5-di-tert-butyl-4-hydroxyphenyl)propionic acid, esters of β-(5-tert-butyl-4-hydroxy-3-methylphenyl)propionic acid, esters of β-(3,5-dicyclohexyl-4-hydroxyphenyl)propionic acid, esters of 3,5-di-tert-butyl-4-hydroxyphenylacetic acid, amides of β-(3,5-di-tert-butyl-4-hydroxyphenyl)propionic acid, suitable thiosynergists, secondary antioxidants, phosphites, and phosphonites, benzofuranones, and indolinones.

Preference is given to organic phosphites such as triphenylphosphine, tritolylphosphine or 2,4,6-tri-tert-butylphenyl 2-butyl-2-ethylpropane-1,3-diyl phosphite, phosphonate and phosphanes, mostly those where the organic moieties are composed entirely or to some extent of optionally substituted aromatic moieties.

Very particularly suitable additives are IRGANOX 1076® and triphenylphosphine (TPP).

Examples of suitable mould-release agents are the esters or partial esters of mono- to hexahydric alcohols, in particular of glycerol, of pentaerythritol or of Guerbet alcohols.

Examples of monohydric alcohols are stearyl alcohol, palmityl alcohol and Guerbet alcohols, an example of a dihydric alcohol is glycol, an example of a trihydric alcohols is glycerol, examples of tetrahydric alcohols are pentaerythritol and mesoerythritol, examples of pentahydric alcohols are arabitol, ribitol and xylitol, and examples of hexahydric alcohols are mannitol, glucitol (sorbitol) and dulcitol.

The esters are preferably the monoesters, diesters, triesters, tetraesters, pentaesters and hexaesters or a mixture of these, in particular a random mixture, made of saturated, aliphatic C₁₀- to C₃₆-monocarboxylic acids and optionally hydroxymonocarboxylic acids, preferably with saturated, aliphatic C₁₄- to C₃₂-monocarboxylic acids and optionally hydroxymonocarboxylic acids.

The commercially available fatty acid esters, in particular of pentaerythritol and of glycerol, can comprise <60% of various partial esters resulting from the production process.

Examples of saturated, aliphatic monocarboxylic acids having from 10 to 36 C atoms are capric acid, lauric acid, myristic acid, palmitic acid, stearic acid, hydroxystearic acid, arachic acid, behenic acid, lignoceric acid, cerotinic acid and montanic acids.

Examples of suitable UV absorbers from the benzotriazoles class are Tinuvin® 171 (2-[2-hydroxy-3-dodecyl-5-methylbenzyl)phenyl]-2H-benzotriazole (CAS No. 125304-04-3), Tinuvin® 234 (2-[2-hydroxy-3,5-di(1,1-dimethylbenzyl)phenyl]-2H-benzotriazole (CAS No. 70321-86-7)), Tinuvin® 328 (2-2[hydroxy-3,5-di-tert-amylphenyl)-2H-benzotriazole (CAS No. 25973-55-1).

Examples of suitable UV absorbers from the oxalanilides class are Sanduvor® 3206 (N-(2-ethoxyphenyl)ethanediamide (CAS No. 82493-14-9)) from Clariant and N-(2-ethoxyphenyl)-N'-(4-dodecylphenyl)oxamide (CAS No. 79102-63-9).

Examples of suitable UV absorbers from the hydroxybenzophenones class are Chimasorb® 81 (2-benzoyl-5-octyloxyphenol (CAS No. 1843-05-6) from BASF SE), 2,4-dihydroxybenzophenone (CAS No. 131-56-6), 2-hydroxy-4-(n-octyloxy)benzophenone (CAS No. 1843-05-6), 2-hydroxy-4-dodecyloxybenzophenone (CAS No. 2985-59-3).

Examples of suitable UV absorbers from the triazines class are 2-[2-hydroxy-4-(2-ethylhexyl)oxy]phenyl-4,6-di(4-phenyl)phenyl-1,3,5-triazine, 2-[2-hydroxy-4-[(octyloxy-carbonyl)ethylidenoxy]phenyl-4,6-di(4-phenyl)phenyl-1,3,5-triazine, 2-[2-hydroxy-4-[3-(2-ethylhexyl-1-oxy)-2-hydroxypropyloxy]phenyl]-4,6-bis(2,4-dimethylphenyl)-1,3,5-triazine (CAS No. 137658-79-8) also known as Tinuvin® 405 (BASF SE), 2,4-diphenyl-6-[2-hydroxy-4-(hexyloxy)phenyl]-1,3,5-triazine (CAS No. 147315-50-2) obtainable as Tinuvin® 1577 (BASF SE). The compound 2-[2-hydroxy-4-(2-ethylhexyl)oxy]phenyl-4,6-di(4-phenyl)phenyl-1,3,5-triazine has the CAS No. 204848-45-3 and is obtainable as Tinuvin® 479 from BASF SE. The compound 2-[2-hydroxy-4-[(octyloxycarbonyl)ethylidenoxy]phenyl-4,6-di(4-phenyl)phenyl-1,3,5-triazine has the CAS No. 204583-39-1 and is obtainable as CGX-UVA006 or Tinuvin® 1600 from BASF SE.

The quantity generally used of UV absorbers is from 0.01 to 5% by weight, preferably from 0.01 to 2% by weight, particularly preferably from 0.01 to 0.05% by weight, based on the entire composition.

Examples of dyes or pigments that can be used are organic or inorganic pigments or organic dyes or the like.

In one preferred embodiment, carbon black is used as colorant component.

### Component B

Component B is a glass composed of a glass composition selected from the group of the M, E, A, S, R, AR, ECR, D, Q or C glasses further preference being given here to E, S or C glass.

The form in which the glass composition is used can be that of solid glass spheres, hollow glass spheres, glass beads, glass flakes, glass fragments, or glass fibres, further preference being given here to the glass fibres. The form in which the glass fibres are used can be that of continuous-filament fibres (rovings), chopped glass fibres, ground fibres, glass-fibre textiles or a mixture of the abovementioned forms, preference being given here to use of the chopped glass fibres or the ground fibres. Chopped glass fibres are particularly preferably used. The length of the chopped glass fibres prior to compounding is preferably from 0.5 to 10 mm, more preferably from 1.0 to 8 mm, very particularly preferably from 1.5 to 6 mm. It is possible to use chopped glass fibres with various cross sections. Preference is given to use of round, elliptical, oval, octagonal and flat cross sections, and particular preference is given here to the round, oval, and flat cross sections. The diameter of round fibres is preferably from 5 to 25 µm, more preferably from 6 to 20 µm, particularly preferably from 7 to 17 µm.

The thickness:width cross-sectional ratio of preferred flat and oval glass fibres is about 1.0:1.2 to 1.0:8.0, preferably 1.0:1.5 to 1.0:6.0, particularly preferably 1.0:2.0 to 1.0:4.0. The average fibre thickness of the flat and oval glass fibres is moreover from 4 µm to 17 µm, preferably from 6 µm to 12 µm and particularly preferably from 6 µm to 8 µm, while their average fibre width is from 12 µm to 30 µm, preferably from 14 µm to 28 µm and particularly preferably from 16 µm to 26 µm.

In one preferred embodiment, the glass fibres have been modified with a glass sizing on the surface of the glass fibre. Preferred glass sizings are epoxy-modified, polyurethane-modified and unmodified silane compounds and mixtures of the abovementioned silane compounds.

In another preferred embodiment, the glass fibres can comprise a glass sizing.

A feature of the glass fibres used is that the selection of the fibre is not subjected to restriction by virtue of the manner in which the fibre interacts with the polycarbonate matrix. An improvement of the inventive properties of the compositions is apparent not only when there is strong coupling to the polymer matrix but also when a non-coupling fibre is used. Strong coupling of the glass fibre to the polymer matrix can be discerned from the low-temperature fracture surfaces in scanning electron micrographs, where fracture of most of the fractured glass fibres and of the matrix take place at the same level, and only a few glass fibres protrude from the matrix. In the opposite of non-coupling properties, scanning electron micrographs show that in low-temperature fracture the glass fibres protrude markedly from the matrix or entire fibres have been removed because of lack of adhesion.

In the case of glass fibre contents preferably greater than 20.0 parts by weight, particularly preferably greater than 25.0 parts by weight and very particularly preferably greater than 30.0 parts by weight, the inventive compositions use flat fibres.

### Component C

Other inorganic materials differing from component B can be added to the polycarbonate composition, and the quantities here are determined in such a way that they have a favourable, or at least not adverse, effect on the mechanical properties of the material. Materials that can be used for this purpose are in principle any finely ground inorganic materials. These can by way of example take the form of particles, of flakes or of fibres. Examples that may be mentioned at this point are chalk, quartz powder, titanium dioxide, silicates/aluminosilicates, e.g. talc, wollastonite, mica/clay minerals, montmorillonite, in particular also in an organophilic form modified by ion exchange, kaolin, zeolites, vermiculite, and aluminium oxide, silica, magnesium hydroxide and aluminium hydroxide. It is also possible to use mixtures of various inorganic materials.

The inorganic materials can have been surface-treated, e.g. silanized, in order to ensure better polymer-compatibility.

Concentrations used of the inorganic materials are from 0 to 15 parts by weight, preferably up to 10 parts by weight, in particular up to 7 parts by weight, based on the entire composition. The compositions usually comprise at least 0.5 parts by weight, preferably 2 parts by weight, of the inorganic materials. It is particularly preferable that the compositions comprise from 4 to 6 parts by weight of inorganic materials.

In one particular embodiment of the present invention, the compositions which have ≥ 20% by weight glass fibre content are preferably combined with relatively small quantities of inorganic materials, preferably ≤ 10% by weight, particularly preferably ≤ 5.5% by weight.

In another particular embodiment of the present invention, compositions which have ≥ 40% by weight glass fibre content are preferably combined with relatively small contents of inorganic materials, preferably ≤ 5.5% by weight, particularly preferably ≤ 2% by weight.

Preferred compositions comprise 20 to 30 wt.-% glass fibres as component B and 5 to 10 wt.-% talc as component C.

It is preferable to use inorganic materials taking the form of flakes, examples being talc, mica/clay minerals, montmorillonite, in particular also in an organophilic form modified by ion exchange, kaolin, and vermiculite. Talc is particularly preferred. Talc means a naturally occurring or synthetic talc.

Pure talc has the chemical composition 3 MgO.4SiO₂.H₂O, and its content of MgO is therefore 31.9% by weight, its content of SiO₂ is therefore 63.4% by weight and its content of chemically bonded water is therefore 4.8% by weight. This is a phyllosilicate.

Naturally occurring talc materials do not generally have the ideal composition stated above, because they have impurities due to partial replacement of the magnesium by other elements, due to partial replacement of silicon by, for example, aluminium and/or due to intergrowths with other minerals, e.g. dolomite, magnesite and chlorite. These natural talc powders comprising impurities can also be used in the inventive moulding compositions, but preference is given to high-purity types of talc. These are characterized by MgO content of from 28 to 35% by weight, preferably from 30 to 33% by weight, particularly preferably from 30.5 to 32% by weight, and SiO₂ content of from 55 to 65% by weight, preferably from 58 to 64% by weight, particularly preferably from 60 to 62.5% by weight. Preferred types of talc moreover feature Al₂O₃ content smaller than 5% by weight, particularly preferably smaller than 1% by weight, in particular smaller than 0.7% by weight.

It is in particular advantageous to use talc in the form of finely ground types with median particle size d50 < 20 µm, preferably < 10 µm, particularly preferably <5 µm, very particularly preferably < 2.5 µm.

Mention may moreover be made of the following as preferred inorganic component: very finely divided (nano-scale) inorganic compounds made of one or more metals of the 1st to 5th main group and the 1st to 8th transition group of the periodic table of the elements, preferably from the 2nd to 5th main group and the 4th to 8th transition group, particularly preferably from the 3rd to 5th main group and the 4th to 8th transition group, with the following elements: oxygen, sulphur, boron, phosphorus, carbon, nitrogen, hydrogen and/or silicon.

Examples of preferred compounds are oxides, hydroxides, hydrated/basic oxides, sulphates, sulphites, sulphides, carbonates, carbides, nitrates, nitrites, nitrides, borates, silicates, phosphates and hydrides.

The median particle diameters of the nano-scale inorganic materials are less than or equal to 200 nm, preferably less than or equal to 150 nm, in particular from 1 to 100 nm.

Particle size and particle diameter always means the median particle diameter d50, determined by ultracentrifuge measurements in accordance with W. Scholtan et al., Kolloid-Z. und Z. Polymere 250 (1972), pp. 782 to 796.

The nano-scale inorganic compounds can take the form of powders, pastes, sols, dispersions or suspensions. Powders can be obtained by precipitation from dispersions, sols or suspensions.

### Component D

Phosphorus-containing flame retardants D for the purposes of the invention are preferably those selected from the groups of the mono- and oligomeric phosphoric and phosphonic esters and phosphonate amines, but it is also possible here to use a mixture of a plurality of components selected from one or more of these groups as flame retardant. Other halogen-free phosphorus compounds not specifically mentioned here can also be used alone or in any desired combination with other halogen-free phosphorus compounds.

Preferred mono- and oligomeric phosphoric or phosphonic esters are phosphorus compounds of the general formula (I) as mentioned above
R¹, R², R³ and R⁴ are mutually independently respectively optionally halogenated C₁- to C₈-alkyl, or respectively optionally alkyl-, preferably C₁- to C₄-alkyl-, and/or halogen-, preferably chlorine- or bromine-, substituted C₅- to C₆-cycloalkyl, C₆- to C₂₀-aryl or C₇- to C₁₂-arylalkyl,

It is preferable that R¹, R², R³ and R⁴ are mutually independently C₁- to C₄-alkyl, phenyl, naphthyl or phenyl-Ci- to -C₄-alkyl. The aromatic groups R¹, R², R³ and R⁴ can in turn have substitution by halogen groups and/or by alkyl groups, preferably chlorine, bromine and/or C₁- to C₄-alkyl. Particularly preferred aryl moieties are cresyl, phenyl, xylenyl, propylphenyl and butylphenyl, and also the corresponding brominated and chlorinated derivatives thereof.

Bisphenol A-based oligophosphate according to formula (Va) is most preferred as component D 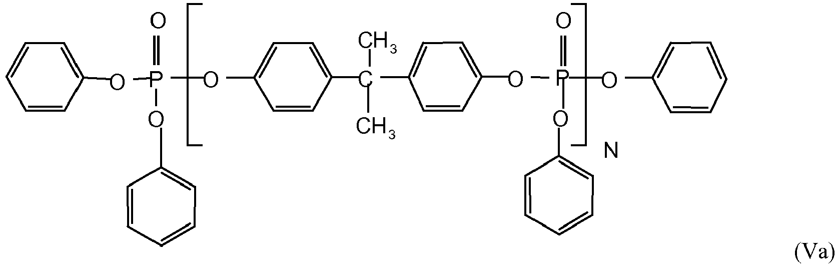 N = 1.0 to 3.0, preferably 1.05 to 2.0, more preferably 1.05 to 1.6, especially N= 1.1

The phosphorus compounds according to component D are known (cf., for example, EP-A 0 363 608, EP-A 0 640 655) or can be produced analogously in accordance with known methods (e.g. Ullmanns Enzyklopädie der technischen Chemie [Ullmann's encyclopaedia of industrial chemistry], Vol. 18, pp. 301 ff., 1979; Houben-Weyl, Methoden der organischen Chemie [Methods of organic chemistry], Vol. 12/1, p. 43; Beilstein Vol. 6, p. 177).

Mixtures of phosphates having different chemical structure and/or having identical chemical structure and different molecular weight can also be used as inventive component D.

It is preferable to use mixtures having identical structure and having different chain length, where the stated N value is the average N value. The average N value is determined by using high pressure liquid chromatography (HPLC) at 40°C in a mixture of acetonitrile and water (50:50) to determine the composition of the phosphorus compound (molecular weight distribution), thus calculating the average values for N.

It is moreover possible to use, as flame retardants, the phosphonate amines described in WO 00/00541 and WO 01/18105.

The flame retardants of component D can be used alone or in any desired mixture with one another or in a mixture with other flame retardants.

When the inventive compositions have been rendered flame-retardant, it is preferable that an antidrip agent is also present. It is preferable to use, as antidrip agent, polytetrafluoroethylene (PTFE) or PTFE-containing compositions, for example masterbatches of PTFE with styrene-containing or methyl-methacrylate-containing polymers or copolymers (e.g. styrene/acrylonitrile copolymers) in the form of powders or in the form of coagulated mixture, e.g. with component B.

The fluorinated polyolefins used as antidrip agent are of high molecular weight and have glass transition temperatures above -30°C, generally above 100°C, fluorine contents that are preferably from 65 to 76% by weight, in particular from 70 to 76% by weight, and median particle diameters d50 of from 0.05 to 1000 µm, preferably from 0.08 to 20 µm. The density of the fluorinated polyolefins is generally from 1.2 to 2.3 g/cm³. Preferred fluorinated polyolefins are polytetrafluoroethylene, polyvinylidene fluoride, tetrafluorethylene/hexafluoropropylene copolymers and ethylene/tetrafluoroethylene copolymers. The fluorinated polyolefins are known (cf. "Vinyl and Related Polymers" by Schildknecht, John Wiley & Sons, Inc., New York, 1962, pp. 484-494; "Fluoropolymers" by Wall, Wiley-Interscience, John Wiley & Sons, Inc., New York, Volume 13, 1970, pp. 623-654; "Modern Plastics Encyclopedia", 1970-1971, Volume 47, No. 10 A, October 1970, Mc Graw-Hill, Inc., New York, pp. 134 and 774; "Modern Plastics Encyclopedia", 1975-1976, October 1975, Volume 52, No. 10 A, Mc Graw-Hill, Inc., New York, pp. 27, 28 and 472 and US Patent 3 671 487, 3 723 373 and 3 838 092).

They can be produced by known processes, for example by polymerizing tetrafluoroethylene in an aqueous medium with a catalyst that forms free radicals, for example sodium, potassium or ammonium peroxydisulphate at pressures of from 7 to 71 kg/cm² and at temperatures of from 0 to 200°C, preferably at temperatures of from 20 to 100°C. (For further details, see by way of example US Patent 2 393 967.) Depending on usage form, the density of these materials can be from 1.2 to 2.3 g/cm³, and their median particle size can be from 0.05 to 1000 µm.

The median particle diameters of the fluorinated polyolefins that according to the invention are preferred are from 0.05 to 20 µm, preferably from 0.08 to 10 µm, and their density is from 1.2 to 1.9 g/cm³.

Suitable fluorinated polyolefins D that can be used in powder form are tetrafluoroethylene polymers with median particle diameters of from 100 to 1000 µm and densities of from 2.0 g/cm³ to 2.3 g/cm³. Suitable tetrafluoroethylene polymer powders are commercially available products and are supplied by way of example as Teflon® by DuPont.

Particularly preferred flame-retardant compositions comprise, alongside optional other additives, a fluorinated polyolefin at from 0.05 to 5.0 parts by weight, preferably from 0.1 to 2.0 parts by weight, particularly preferably from 0.3 to 1.0 part by weight.

### Component E

For the purposes of the present invention, component E is an ethylene-alkyl (meth)acrylate copolymer of the formula (IV), 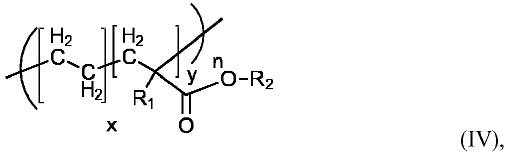 where
R₁ is methyl or hydrogen,
R₂ is hydrogen or a C₁- to C₁₂-alkyl moiety, preferably methyl, ethyl, propyl, isopropyl, butyl, sec-butyl, tert-butyl, isobutyl, hexyl, isoamyl, or tert-amyl,
each of x and y is an independent degree of polymerization (integer), and
n is an integer >= 1.

The ratios of the degrees of polymerization x and y are preferably in the range x:y = from 1:300 to 90:10.

The ethylene-alkyl (meth)acrylate copolymer can be a random, block or multiblock copolymer or a mixture of the said structures. In one preferred embodiment, branched and unbranched ethylene-alkyl (meth)acrylate copolymer, particularly linear ethylene-alkyl (meth)acrylate copolymer, is used.

Preferably, component E is ethylene-methylacrylate copolymer or, alternatively, ethylene-methylacrylate copolymer is one of the components E.

The melt flow rate (MFR) of the ethylene-alkyl (meth)acrylate copolymer (measured at 190°C for 2.16 kg load) is preferably in the range from 2.5 to 40.0 g/10 min., particularly preferably in the range from 3.0 to 10.0 g/10 min., very particularly preferably in the range from 3.0 to 8.0 g/10 min.

The compositions do not contain any core-shell modifiers and even no additional impact modifier at all. Compositions without core-shell modifier but only with ethylene-alkyl (meth)acrylate copolymer exhibit an improved thermal stability during processing.

Further modifiers of this type are typically elastomeric materials which have high molecular weight and based on olefins, on monovinylaromatic monomers, on acrylic and methacrylic acid and on ester derivatives thereof, and also on conjugated dienes. The polymers obtained from conjugated dienes can have been to some extent or fully hydrogenated. The elastomeric materials can have the structure of homopolymers or of copolymers. The copolymers can in turn be used in the form of random or alternating copolymers, block copolymers or graft copolymers.

Among the preferred polymerizable acrylates are C₁- to C₈-alkyl esters, for example methyl, ethyl, n-butyl, n-octyl and 2-ethylhexyl esters, and also mixtures of these monomers. Very particular preference is given to a butyl-acrylate-based modifier.

When component E is combined with at least one further modifier, the total amount of the said components added in the inventive compositions is from 0.5 to 4.5 parts by weight, preferably from 1.0 to 4.2 parts by weight, more preferably from 2.0 to 4.0 parts by weight.

The present moulding compositions are free from graft polymers based on butadiene rubbers, for example acrylonitrile-butadiene-styrene copolymers (ABS).

A preferred alternative of compositions according to the inventions are those comprising:
A) 10 to 78 parts by weight of at least one thermoplastic, aromatic polycarbonate,
B) 15 to 60 parts by weight, preferably 20 to 35 parts by weight, of at least one glass fibre,
C) 5 to 10.5 parts by weight of talc,
D) 5 to 15 parts by weight of at least one phosphorus compound of the general formula (I) 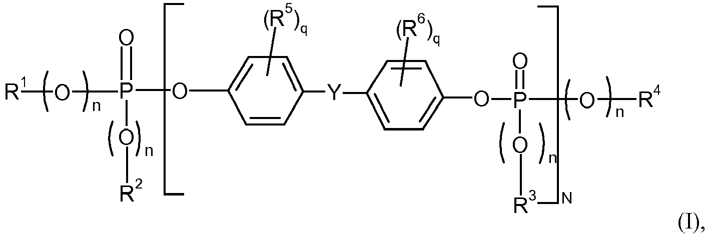 wherein
   R¹, R², R³ and R⁴ independently of one another denote C₁- to C₈-alkyl, alkyl-substituted C₅-to C₆-cycloalkyl, C₆- to C₁₀-aryl and/or C₇- to C₁₂-aralkyl,
   n denotes, independently of one another, 0 or 1,
   q denotes, independently of one another, 0, 1, 2, 3 or 4,
   N is a number from 0.1 to 30,
   R⁵ and R⁶ denote, independently of one another, C₁-to C₄-alkyl, and
   Y is C₁- to C₇-alkylidene, C₁- to C₇-alkylene, C₅- to C₁₂-cycloalkylene, C₅- to C₁₂-cycloalkylidene, -O-, -S-, -SO-, SO₂ or -CO-,
E) ≥ 4 to 4.5 parts by weight of at least one ethylene-alkyl (meth)acrylate copolymer, which has a melt flow rate of at least 2.5 g/10 min determined in accordance with ASTM D1238 for 190°C and 2.16 kg,
wherein the sum of the parts by weight of components A) to E) is 100 parts by weight. These compositions do not contain any further impact modifiers.

These compositions preferably contain 5.05 to 10.1 parts by weight of talc.

In case of both alternatives, component E preferably is or contains ethylene-methylacrylate copolymer.

Particularly preferred compositions do not contain any other components or do not contain any other components than release agents, e.g. pentaerythritol tetrastearate or stearyl stearate, anti-dripping agents, thermal stabilizers, e.g. TPP and Irganox B900, pigments and colouring agents, e.g. carbon black, and acid, preferably citric acid. The inventive polymer compositions comprising the abovementioned components are produced by familiar incorporation processes by combining, mixing and homogenizing the individual constituents, and in particular the homogenization here preferably takes place in the melt with exposure to shear forces. The materials are optionally combined and mixed prior to homogenization in the melt, with use of powder premixes.

It is also possible to use premixes made of granulated materials or of granulated materials and of powders with the inventive additions.

It is also possible to use premixes which have been produced from solutions of the mixture components in suitable solvents, where the materials have optionally been homogenized in solution and then the solvent is removed.

In particular, the components and abovementioned additives of the inventive composition can be introduced here by known methods or in the form of masterbatch.

The use of masterbatches is in particular preferred for the introduction of the additives, and in particular masterbatches based on the respective polymer matrix are used here.

In this connection, the composition can be combined in conventional devices such as screw-based extruders (for example ZSKs (twin-screw extruders)), kneaders, Brabender mixers or Banbury mixers, mixed, homogenized and then extruded. The extrudate can be cooled and comminuted. It is also possible to premix individual components and then to add the remaining starting materials individually and/or likewise in a mixture.

The plastics mouldings can preferably be produced by injection moulding, thermoforming, extrusion, lamination, film-insert moulding, in-mould decoration, in-mould coating and rapid-heatcycle moulding.

The use of the inventive plastics composition for producing multilayer systems is also of interest. Here, the inventive plastics composition is applied in one or more layers to a moulded article made of a plastic. The application can take place simultaneously with or immediately after the shaping of the moulding, for example by injecting material onto the back of a foil, coextrusion or multicomponent injection moulding. However, the application process can also be carried out onto a base that already has its final shape, e.g. by lamination with a film, injection of material around an existing moulding, or by coating from a solution.

The present invention further provides the use of inventive compositions for the production of mouldings, for example thin-walled, rigid components, in particular frame components for LCD/LED devices, in the electrical and electronics and IT sector, and also the mouldings obtainable from the inventive compositions.

### Examples

### Component A-1

Linear bisphenol A-based polycarbonate with MVR about 19.0 g/10 min (in accordance with ISO 1133, for 300°C and 2.16 kg load).

### Component A-2

Linear bisphenol A-based polycarbonate with MVR about 17.0 g/10 min (in accordance with ISO 1133, for 250°C and 2.16 kg load).

### Component A-3

Linear bisphenol A-based polycarbonate with MVR about 6.5 g/10 min (in accordance with ISO 1133, for 300°C and 2.16 kg load).

### Component A-4

Linear bisphenol A-based polycarbonate with MVR about 12.0 g/10 min (in accordance with ISO 1133, for 300°C and 2.16 kg load).

### Component B-1

CS 7968, chopped round short glass fibres (with good coupling) from Lanxess AG with average fibre diameter 11 µm and average fibre length 4.5 mm.

### Component B-2

CS 03 PE 937, chopped round short glass fibres (with good coupling) from Nittobo with average fibre diameter 13 µm and average fibre length 3.0 mm.

### Component B-3

CSG 3PA-830S, chopped flat short glass fibres (with good coupling) from Nittobo with average fibre thickness from 6 µm to 8µm and average fibre width from 22µm to 28 µm. The thickness: width cross-sectional ratio of this fibre is accordingly about 1:3 to 1:4.

### Component C

Naintsch A3: very finely ground high-purity talc from Naintsch Mineralwerke GmbH (Graz, Austria).

### Component D-1

Bisphenol-A-based oligophosphate with 8.9% phosphorus content.

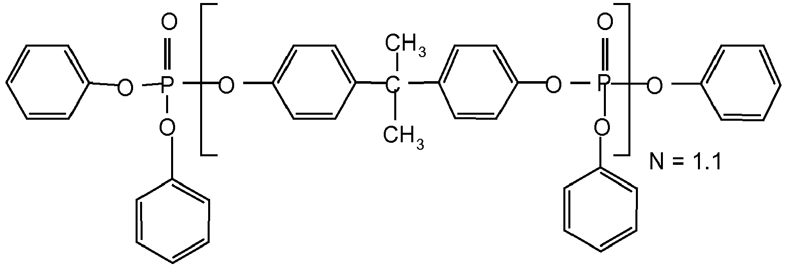

### Component D-2

Potassium nonafluoro-1-butanesulphonate is available commercially inter alia as Bayowet®C4 (Lanxess, Leverkusen, Germany, CAS No. 29420-49-3), RM64 (Miteni, Italy) or as 3M™ Perfluorobutanesulfonyl fluoride FC-51 (3M, USA).

### Component E-1

Elvaloy AC1820 (DuPont), ethylene-methyl acrylate copolymer with 20% methyl acrylate content and with melt flow rate 8 g/10 min determined for 190°C and 2.16 kg.

### Component F

Polytetrafluoroethylene (Blendex® B449 (about 50% of PTFE and about 50% of SAN [made of 80% styrene and 20% of acrylonitrile] from Chemtura).

### Component G-1

Pentaerythritol tetrastearate is available commercially as Loxiol VPG 861 from Emery Oleochemicals.

### Component G-2

Stearyl stearate is obtainable commercially as Loxiol G32 from Emery Oleochemicals.

### Component H

Triphenylphosphine (TPP, Sigma-Aldrich, 82018 Taufkirchen, Germany)

### Component I

Citric acid is available commercially from Hamann und Reimer.

### Component J

The black pigment Black Pearls 800 is available commercially from Cabot Corporation.

### Component K

Irganox B900 is available commercially as processing and heat stabilizer from BASF SE.

Components A to K were mixed in a ZSK 25 laboratory extruder (Werner & Pfleiderer), melt temperature being 300°C, throughput being 15 kg/h and screw rotation frequency being 200 rpm. The mouldings were produced in an injection-moulding machine (Arburg 270E) at 300°C.

The following detailed criteria are required for classification of a flame-retardant plastic into fire class UL 94 V0: for a set of 5 ASTM standard test specimens (dimensions: 127 × 12.7 × X, where X = thickness of test specimen, e.g. 2.0; 1.2; 1.0 and 0.75 mm), none of the specimens may have an afterflame time longer than 10 seconds after two flame applications of 10 seconds using an open flame of defined height. The sum of the afterflame times for 10 flame applications to 5 specimens may not be greater than 50 seconds. Other required criteria are no flaming drips, no complete consumption of the specimen, and afterglow time for each test specimen no longer than 30 seconds. The UL 94 V1 classification demands that the individual afterflame times are not longer than 30 seconds and that the sum of the afterflame times for 10 flame applications to 5 specimens is not greater than 250 seconds. The total afterglow time may not be more than 250 seconds. The other criteria are identical with those mentioned above. Classification into fire classification UL 94 V-2 applies when flaming drips are produced but the other criteria of UL 94 V1 classification are achieved.

MVR is determined in accordance with ISO 1133 at 260°C using a ram load of 5 kg or at 300°C using a ram load of 2.16 kg.

Modulus of elasticity was measured in accordance with ISO 527 on single-side-injected dumbbell specimens with a core measuring 80 × 10 × 4 mm.

The tables below summarize the compositions and test results.

### Results

Comparison of Comparative Examples 1.1 to 1.3 with Comparative Examples 2.3 to 2.7 shows clearly that moulding compositions comprising component D-2 have lower melt volume flow rate (MVR) than moulding compositions comprising component D-1. Moulding compositions comprising component D-2 are moreover unsuitable for achieving the fire classification V0 in accordance with UL 94 at wall thickness 1.00 mm, preferably 0.75 mm.

Comparative Examples 3.1 to 3.3 reveal moulding compositions comprising an increased proportion of component E. A feature of these moulding compositions is that they are unsuitable for achieving the fire classification V0 in accordance with UL 94 at wall thickness 1.00 mm, preferably 0.75 mm.

Inventive Examples 1 to 15 in turn reveal inventive moulding compositions with combinations of components A to E which on the one hand achieve the fire classification V0 in accordance with UL 94 at wall thickness 1.0 mm, preferably 0.75 mm, while on the other hand adequately good processability of the moulding compositions is ensured. It has moreover been shown that glass-fibre-reinforced polycarbonate compositions with variably definable modulus of elasticity are provided via the specific selection of the preferred ranges of components B to E.

The amounts of the components in tables 1 to 3 are given in wt.-%.

**Table 1**

| | Component | Unit | comparison 1.1 | comparison 1.2 | comparison 1.3 | comparison 2.1 | comparison 22 | comparison 2.3 | comparison 2.4 | comparison 2.5 | comparison 26 | comparison 2.7 |
|---|---|---|---|---|---|---|---|---|---|---|---|---|
| | Component A-1 | | 67.57 | 66.73 | 64.74 | 63.00 | 61.00 | 40.84 | 39.34 | | 30.88 | 29.38 |
| | Component A-2 | | 10.00 | | | | | | | | | |
| | Component A-3 | | | 5.74 | 5.74 | 5.39 | 5.39 | 4.19 | 4.19 | 43.29 | 4.19 | 4.19 |
| | Component B-2 | | | | | | | | | 40.00 | | |
| | Component B-1 | | 20.00 | 25.00 | 25.00 | 20.00 | 20.00 | | | | | |
| | Component B-3 | | | | | | | 40.00 | 40.00 | | 50.00 | 50.00 |
| | Component E-1 | | 2.00 | 2.00 | 4.00 | 3.00 | 3.00 | 4.00 | 4.00 | 4.00 | 4.00 | 4.00 |
| | Component D-1 | | | | | 8.00 | 10.00 | 10.00 | 11.50 | 12.00 | 10.00 | 11.50 |
| | Component D-2 | | 0.06 | 0.10 | 0.10 | | | | | | | |
| | Component F | | | | | 0.20 | 0.20 | 0.50 | 0.50 | 0.20 | 0.50 | 0.50 |
| | Component G-1 | | 0.35 | 0.27 | 0.26 | 0.25 | 0.25 | 0.26 | 0.26 | 0.35 | 0.22 | 0.22 |
| | Component H | | 0.02 | | | | | | | | | |
| | Component I | | | | | | | 0.05 | 0.05 | | 0.05 | 0.05 |
| | Component J | | | 0.16 | 0.16 | 0.16 | 0.16 | 0.16 | 0.16 | 0.16 | 0.16 | 0.16 |
| MVR (300°C / 1,2kg) | ISO 1133 | cm³/ 10min | 9.8 | 7.4 | 6.7 | 20.0 | 23.0 | 18.0 | 14.6 | 16.1 | 14.5 | 14.6 |
| Burning behavior | UL-94 (0.75mm) | class | V2 | V1 | V2 | V0 | V0 | V1 | V1 | V1 | V2 | V1 |
| Burning behavior | UL-94 (1.00mm) | class | | V0 | V1 | V0 | V0 | V0 | V0 | V1 | V1 | V1 |
| Burning behavior | UL-94 (1.20mm) | class | | | | V0 | V0 | | | | | |
| Tensile modulus | ISO 527 | MPa | 6032 | 6832 | 6793 | 7010 | 7266 | 11701 | 11754 | 11007 | 15443 | 15456 |

**Table 2**

| | Component | Unit | comparison 3.1 | comparison 3.2 | comparison 3.3 | example 1 | example 2 | example 3 | example 4 | example 5 | example 6 | example 7 |
|---|---|---|---|---|---|---|---|---|---|---|---|---|
| | Component A-1 | | 29.88 | 24.90 | 49.80 | 52.79 | 49.80 | 27.89 | 41.33 | 37.85 | 35.86 | 34.36 |
| | Component A-2 | | 20.00 | 20.00 | | | | 25.00 | | | | |
| | Component A-4 | | | | | | | | | | | |
| | Component A-3 | | 4.39 | 4.49 | 4.59 | 6.29 | 4.29 | 4.24 | 4.19 | 4.19 | 4.19 | 4.19 |
| | Component B-2 | | 30.00 | 35.00 | 25.00 | 20.00 | 20.00 | 20.00 | | | | |
| | Component B-3 | | | | | | | | 35.00 | 35.00 | 35.00 | 35.00 |
| | Component C | | | | 5.00 | 5.00 | 10.00 | 10.00 | 5.00 | 10.00 | 10.00 | 10.00 |
| | Component E-1 | | 5.00 | 5.00 | 5.00 | 3.00 | 3.00 | 4.00 | 3.00 | 2.00 | 4.00 | 4.00 |
| | Component D-1 | | 10.00 | 10.00 | 10.00 | 12.00 | 12.00 | 8.00 | 10.50 | 10.00 | 10.00 | 11.50 |
| | Component F | | 0.20 | | | 0.50 | 0.50 | 0.50 | 0.50 | 0.50 | 0.50 | 0.50 |
| | Component G-1 | | 0.32 | 0.40 | 0.40 | 0.21 | 0.20 | 0.16 | 0.27 | 0.25 | 0.24 | 0.24 |
| | Component G-2 | | | | | | | | | | | |
| | Component I | | 0.05 | 0.05 | 0.05 | 0.05 | 0.05 | 0.05 | 0.05 | 0.05 | 0.05 | 0.05 |
| | Component J | | 0.16 | 0.16 | 0.16 | 0.16 | 0.16 | 0.16 | 0.16 | 0.16 | 0.16 | 0.16 |
| MVR (260°C / 5kg) | ISO 1133 | cm³/ 10min | 41.7 | | 28.0 | 31.0 | 31.0 | 30.0 | 32.5 | 32.2 | 29.9 | 37.9 |
| Burning behavior | UL-94 (0.75mm) | class | | | | V0 | V0 | V0 | V0 | V0 | V1 | V0 |
| Burning behavior | UL-94 (1.00mm) | class | | | | V0 | V0 | V0 | V0 | V0 | V0 | V0 |
| Burning behavior | UL-94 (2.00mm) | class | V1 | V1 | V1 | | | | | | | |
| Tensile modulus | ISO 527 | MPa | | 10600 | | 7315 | 8387 | 7912 | 11920 | 13317 | 12495 | 12654 |

**Table 3**

| | Component | Unit | example 8 | example 9 | example 10 | example 11 | example 12 | example 13 | example 14 | example 15 |
|---|---|---|---|---|---|---|---|---|---|---|
| | Component A-1 | | 34.86 | 36.87 | 33.37 | | 32.87 | 30.88 | 31.37 | 29.38 |
| | Component A-2 | | | | | | | | | |
| | Component A-4 | | | | | 36.1 | | | | |
| | Component A-3 | | 5.24 | 3.72 | 5.24 | 4.84 | 4.19 | 4.19 | 4.19 | 4.19 |
| | Component B-2 | | 35.00 | 35.00 | 35.00 | | | | | |
| | Component B-3 | | | | | 45.00 | 45.00 | 45.00 | 45.00 | 45.00 |
| | Component C | | 10.00 | 10.00 | 10.00 | 0.90 | 5.00 | 5.00 | 5.00 | 5.00 |
| | Component E-1 | | 4.00 | 2.00 | 4.00 | 2.00 | 2.00 | 4.00 | 2.00 | 4.00 |
| | Component D-1 | | 10.00 | 11.50 | 11.50 | 10.00 | 10.00 | 10.00 | 11.50 | 11.50 |
| | Component F | | 0.50 | 0.50 | 0.50 | 0.50 | 0.50 | 0.50 | 0.50 | 0.50 |
| | Component G-1 | | 0.19 | 0.20 | 0.18 | | 0.23 | 0.22 | 0.23 | 0.22 |
| | Component G-2 | | | | | 0.40 | | | | |
| | Component I | | 0.05 | 0.05 | 0.05 | 0.10 | 0.05 | 0.05 | 0.05 | 0.05 |
| | Component J | | 0.16 | 0.16 | 0.16 | 0.16 | 0.16 | 0.16 | 0.16 | 0.16 |
| MVR (260°C / 5kg) | ISO 1133 | cm³ / 10min | 23.8 | 24.1 | 23.1 | 22.0 | 28.5 | 27.0 | 39.2 | 35.0 |
| Burning behavior | UL-94 (0.75mm) | class | V0 | V0 | V0 | V0 | V0 | V0 | V0 | V1 |
| Burning behavior | UL-94 (1.00mm) | class | V0 | V0 | V0 | V0 | V0 | V0 | V0 | V0 |
| Burning behavior | UL-94 (2.00mm) | class | | | | | | | | |
| Tensile modulus | ISO 527 | MPa | 12086 | 13216 | 13032 | 14000 | 15246 | 14616 | 15193 | 15051 |

## Claims

1. A polycarbonate composition comprising:
A) 10 to 78 parts by weight of at least one thermoplastic, aromatic polycarbonate,
B) 15 to 60 parts by weight of at least one glass fibre,
C) 0.5 to 15 parts by weight of at least one lamellar filler,
D) 5 to 15 parts by weight of at least one phosphorus compound of the general formula (I) 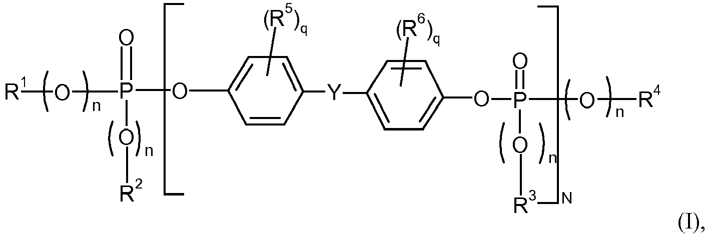 wherein
R¹, R², R³ and R⁴ independently of one another denote C₁- to C₈-alkyl, alkyl-substituted C₅-to C₆-cycloalkyl, C₆- to C₁₀-aryl and/or C₇- to C₁₂-aralkyl,
n denotes, independently of one another, 0 or 1,
q denotes, independently of one another, 0, 1, 2, 3 or 4,
N is a number from 0.1 to 30,
R⁵ and R⁶ denote, independently of one another, C₁- to C₄-alkyl, and
Y is C₁- to C₇-alkylidene, C₁- to C₇-alkylene, C₅- to C₁₂-cycloalkylene, C₅- to C₁₂-cycloalkylidene, -O-, -S-, -SO-, SO₂ or -CO-,
E) 0.5 to 4.5 parts by weight of at least one ethylene-alkyl (meth)acrylate copolymer, which has a melt flow rate of at least 2.5 g/10 min determined in accordance with ASTM D1238 for 190°C and 2.16 kg,
wherein the sum of the parts by weight of components A) to E) is 100 parts by weight and wherein no further impact modifiers are contained and
with the proviso that the composition comprises at least one lamellar filler where ≥ 4.0 parts by weight of the at least one ethylene-alkyl (meth)acrylate copolymer are contained.

2. The polycarbonate composition of claim 1, wherein 5 to 10.5 parts by weight lamellar filler are contained.

3. The polycarbonate composition of claim 1 or claim 2, wherein the lamellar filler is talc.

4. The polycarbonate composition according to one of the preceding claims, wherein the average molar masses M_{w} of thermoplastic aromatic polycarbonate are from 20 000 g/mol to 32 000 g/mol, determined according to the description.

5. The polycarbonate composition according to one of the preceding claims, wherein in formula (I) N is 0.7 to 5.

6. The polycarbonate composition according to one of the preceding claims, wherein for component E), the melt flow rate (MFR) is in the range from 3.0 to 8.0 g/10 min, determined in accordance with ASTM D1238 for 190°C and 2.16 kg.

7. The polycarbonate composition according to one of the preceding claims, wherein when greater than 20 parts by weight of glass fibers are used, based on the total weight of the polycarbonate composition as 100 parts by weight, the glass fibers are flat fibers.

8. The polycarbonate composition according to one of the preceding claims, wherein the at least one glass fiber is used in combination with component C) comprising talc.

9. A polycarbonate composition according to claim 1 comprising:
A) 10 to 78 parts by weight of at least one thermoplastic, aromatic polycarbonate,
B) 15 to 60 parts by weight of at least one glass fibre,
C) 0.5 to 15 parts by weight of at least one lamellar filler,
D) 5 to 15 parts by weight of at least one phosphorus compound of the general formula (I) 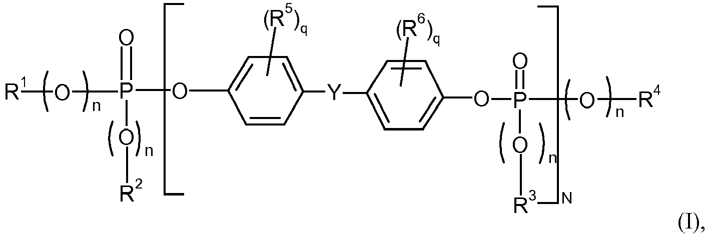 wherein
R¹, R², R³ and R⁴ independently of one another denote C₁- to C₈-alkyl, alkyl-substituted C₅-to C₆-cycloalkyl, C₆- to C₁₀-aryl and/or C₇- to C₁₂-aralkyl,
n denotes, independently of one another, 0 or 1,
q denotes, independently of one another, 0, 1, 2, 3 or 4,
N is a number from 0.1 to 30,
R⁵ and R⁶ denote, independently of one another, C₁-to C₄-alkyl, and
Y is C₁- to C₇-alkylidene, C₁- to C₇-alkylene, C₅- to C₁₂-cycloalkylene, C₅- to C₁₂-cycloalkylidene, -O-, -S-, -SO-, SO₂ or -CO-,
E) 0.5 to < 4 parts by weight of at least one ethylene-alkyl (meth)acrylate copolymer, which has a melt flow rate of at least 2.5 g/10 min determined in accordance with ASTM D1238 for 190°C and 2.16 kg,
wherein the sum of the parts by weight of components A) to E) is 100 parts by weight and wherein no further impact modifiers are contained.

10. A polycarbonate composition according to claim 1 comprising:
A) 10 to 78 parts by weight of at least one thermoplastic, aromatic polycarbonate,
B) 15 to 60 parts by weight of at least one glass fibre,
C) 5 to 10.5 parts by weight of talc,
D) 5 to 15 parts by weight of at least one phosphorus compound of the general formula (I) 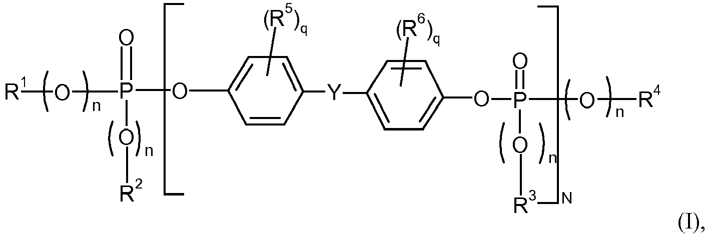 wherein
R¹, R², R³ and R⁴ independently of one another denote C₁- to C₈-alkyl, alkyl-substituted C₅-to C₆-cycloalkyl, C₆- to C₁₀-aryl and/or C₇- to C₁₂-aralkyl,
n denotes, independently of one another, 0 or 1,
q denotes, independently of one another, 0, 1, 2, 3 or 4,
N is a number from 0.1 to 30,
R⁵ and R⁶ denote, independently of one another, C₁-to C₄-alkyl, and
Y is C₁- to C₇-alkylidene, C₁- to C₇-alkylene, C₅- to C₁₂-cycloalkylene, C₅- to C₁₂-cycloalkylidene, -O-, -S-, -SO-, SO₂ or -CO-,
E) ≥ 4 to 4.5 parts by weight of at least one ethylene-alkyl (meth)acrylate copolymer, which has a melt flow rate of at least 2.5 g/10 min determined in accordance with ASTM D1238 for 190°C and 2.16 kg,
wherein the sum of the parts by weight of components A) to E) is 100 parts by weight.

11. A polycarbonte composition according to claim 10, wherein no further impact modifiers are contained.

12. A polycarbonate composition according to one of the preceding claims, wherein component D is 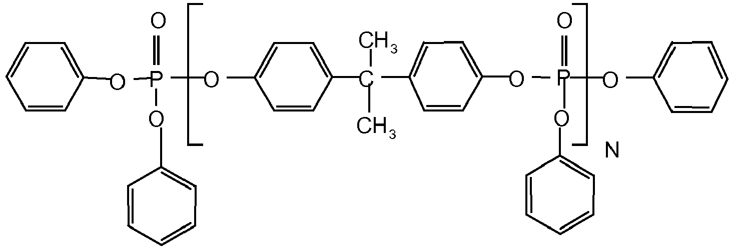 with N = 1,1.

13. Use of the polycarbonate composition according to one of the preceding claims as a moulding composition for preparing thin-walled components with wall thickness ≤ 1.00mm in electrical, electronic and information technology applications.

14. Use of the polycarbonate composition according to claim 13, wherein the wall thickness of the components is at each point or at least partly ≤ 0.75 mm.

15. A moulding comprising a polycarbonate composition according to one of the preceding claims.

## Patentansprüche

1. Polycarbonatzusammensetzung, umfassend:
A) 10 bis 78 Gewichtsteile von mindestens einem thermoplastischen aromatischen Polycarbonat,
B) 15 bis 60 Gewichtsteile von mindestens einer Glasfaser,
C) 0,5 bis 15 Gewichtsteile von mindestens einem lamellaren Füllstoff,
D) 5 bis 15 Gewichtsteile von mindestens einer Phosphorverbindung mit der allgemeinen Formel (I): 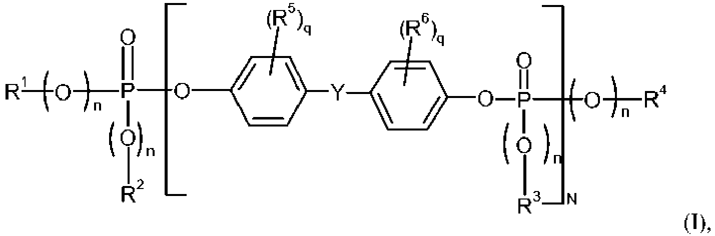 wobei
R¹, R², R³ und R⁴ unabhängig voneinander C₁- bis C₈-Alkyl, alkylsubstituiertes C₅- bis C₆-Cycloalkyl, C₆- bis C₁₀-Aryl und/oder C₇- bis C₁₂-Aralkyl bezeichnen,
n unabhängig voneinander 0 oder 1 bezeichnet,
q unabhängig voneinander 0, 1, 2, 3 oder 4 bezeichnet,
N eine Zahl von 0,1 bis 30 ist,
R⁵ und R⁶ unabhängig voneinander C₁- bis C₄-Alkyl bezeichnen, und
Y C₁- bis C₇-Alkyliden, C₁- bis C₇-Alkylen, C₅- bis C₁₂-Cycloalkylen, C₅- bis C₁₂-Cycloalkyliden, -O-, -S-, -SO-, SO₂ oder -CO- ist,
E) 0,5 bis 4,5 Gewichtsteile von mindestens einem Ethylen-Alkyl(meth)acrylat-Copolymer, das eine Schmelzflussrate von mindestens 2,5 g/10 min aufweist, bestimmt gemäß ASTM D1238 bei 190 °C und 2,16 kg,
wobei die Summe der Gewichtsteile der Komponenten A) bis E) 100 Gewichtsteile ist, und wobei keine weiteren Schlagzähigkeitsmodifikatoren enthalten sind, und
mit der Maßgabe, dass die Zusammensetzung mindestens einen lamellaren Füllstoff umfasst, worin ≥ 4,0 Gewichtsteile des mindestens einen Ethylen-Alkyl(meth)acrylat-Copolymers enthalten sind.

2. Polycarbonatzusammensetzung nach Anspruch 1, wobei 5 bis 10,5 Gewichtsteile lamellarer Füllstoff enthalten sind.

3. Polycarbonatzusammensetzung nach Anspruch 1 oder Anspruch 2, wobei der lamellare Füllstoff Talkum ist.

4. Polycarbonatzusammensetzung nach einem der vorhergehenden Ansprüche, wobei die durchschnittlichen Molekulargewichte M_{w} des thermoplastischen aromatischen Polycarbonats 20000 g/mol bis 32000 g/mol betragen, bestimmt gemäß der Beschreibung.

5. Polycarbonatzusammensetzung nach einem der vorhergehenden Ansprüche, wobei N in Formel (I) 0,7 bis 5 ist.

6. Polycarbonatzusammensetzung nach einem der vorhergehenden Ansprüche, wobei die Schmelzflussrate (MFR) für Komponente E) im Bereich von 3,0 bis 8,0 g/10 min liegt, bestimmt gemäß ASTM D1238 bei 190 °C und 2,16 kg.

7. Polycarbonatzusammensetzung nach einem der vorhergehenden Ansprüche, wobei die Glasfasern Flachfasern sind, wenn mehr als 20 Gewichtsteile der Glasfasern verwendet werden, bezogen auf das Gesamtgewicht der Polycarbonatzusammensetzung als 100 Gewichtsteile.

8. Polycarbonatzusammensetzung nach einem der vorhergehenden Ansprüche, wobei die mindestens eine Glasfaser in Kombination mit Komponente C) verwendet wird, die Talkum umfasst.

9. Polycarbonatzusammensetzung nach Anspruch 1, umfassend:
A) 10 bis 78 Gewichtsteile von mindestens einem thermoplastischen aromatischen Polycarbonat,
B) 15 bis 60 Gewichtsteile von mindestens einer Glasfaser,
C) 0,5 bis 15 Gewichtsteile von mindestens einem lamellaren Füllstoff,
D) 5 bis 15 Gewichtsteile von mindestens einer Phosphorverbindung mit der allgemeinen Formel (I): 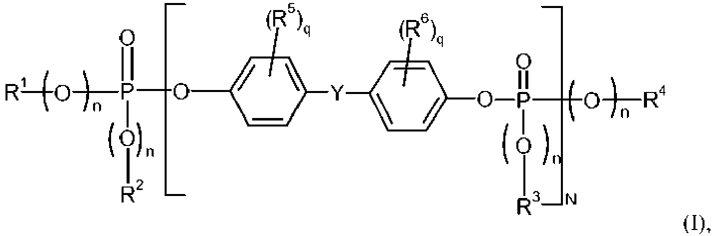 wobei
R¹, R², R³ und R⁴ unabhängig voneinander C₁- bis C₈-Alkyl, alkylsubstituiertes C₅- bis C₆-Cycloalkyl, C₆- bis C₁₀-Aryl und/oder C₇- bis C₁₂-Aralkyl bezeichnen,
n unabhängig voneinander 0 oder 1 bezeichnet,
q unabhängig voneinander 0, 1, 2, 3 oder 4 bezeichnet,
N eine Zahl von 0,1 bis 30 ist,
R⁵ und R⁶ unabhängig voneinander C₁- bis C₄-Alkyl bezeichnen, und
Y C₁- bis C₇-Alkyliden, C₁- bis C₇-Alkylen, C₅- bis C₁₂-Cycloalkylen, C₅- bis C₁₂-Cycloalkyliden, -O-, -S-, -SO-, SO₂ oder -CO- ist,
E) 0,5 bis < 4 Gewichtsteile von mindestens einem Ethylen-Alkyl(meth)acrylat-Copolymer, das eine Schmelzflussrate von mindestens 2,5 g/10 min aufweist, bestimmt gemäß ASTM D1238 bei 190 °C und 2,16 kg,
wobei die Summe der Gewichtsteile der Komponenten A) bis E) 100 Gewichtsteile ist, und wobei keine weiteren Schlagzähigkeitsmodifikatoren enthalten sind.

10. Polycarbonatzusammensetzung nach Anspruch 1, umfassend:
A) 10 bis 78 Gewichtsteile von mindestens einem thermoplastischen aromatischen Polycarbonat,
B) 15 bis 60 Gewichtsteile von mindestens einer Glasfaser,
C) 5 bis 10,5 Gewichtsteile Talkum,
D) 5 bis 15 Gewichtsteile von mindestens einer Phosphorverbindung mit der allgemeinen Formel (I): 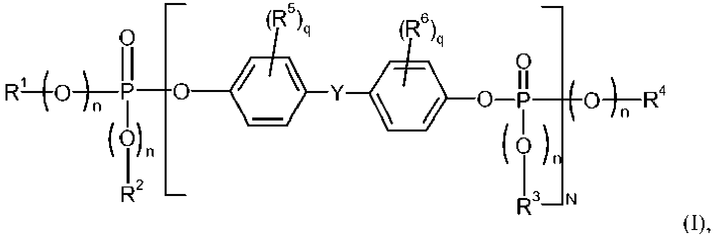 wobei
R¹, R², R³ und R⁴ unabhängig voneinander C₁- bis C₈-Alkyl, alkylsubstituiertes C₅- bis C₆-Cycloalkyl, C₆- bis C₁₀-Aryl und/oder C₇- bis C₁₂-Aralkyl bezeichnen,
n unabhängig voneinander 0 oder 1 bezeichnet,
q unabhängig voneinander 0, 1, 2, 3 oder 4 bezeichnet,
N eine Zahl von 0,1 bis 30 ist,
R⁵ und R⁶ unabhängig voneinander C₁- bis C₄-Alkyl bezeichnen, und
Y C₁- bis C₇-Alkyliden, C₁- bis C₇-Alkylen, C₅- bis C₁₂-Cycloalkylen, C₅- bis C₁₂-Cycloalkyliden, -O-, -S-, -SO-, SO₂ oder -CO- ist,
E) ≥4 bis 4,5 Gewichtsteile von mindestens einem Ethylen-Alkyl(meth)acrylat-Copolymer, das eine Schmelzflussrate von mindestens 2,5 g/10 min aufweist, bestimmt gemäß ASTM D1238 bei 190 °C und 2,16 kg,
wobei die Summe der Gewichtsteile der Komponenten A) bis E) 100 Gewichtsteile ist.

11. Polycarbonatzusammensetzung nach Anspruch 10, wobei keine weiteren Schlagzähigkeitsmodifikatoren enthalten sind.

12. Polycarbonatzusammensetzung nach einem der vorhergehenden Ansprüche, wobei Komponente D 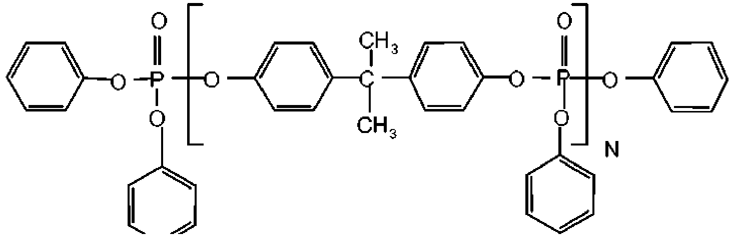 ist, wobei N 1,1 ist.

13. Verwendung der Polycarbonatzusammensetzung nach einem der vorhergehenden Ansprüche als Formungszusammensetzung zur Herstellung von dünnwandigen Komponenten mit einer Wanddicke ≤ 1,00 mm in elektrischen, elektronischen und Informationstechnologieanwendungen.

14. Verwendung der Polycarbonatzusammensetzung nach Anspruch 13, wobei die Wanddicke der Komponenten an jedem Punkt oder mindestens teilweise ≤ 0,75 mm ist.

15. Formling, der eine Polycarbonatzusammensetzung nach einem der vorhergehenden Ansprüche umfasst.

## Revendications

1. Composition de polycarbonate comprenant :
A) 10 à 78 parties en poids d'au moins un polycarbonate aromatique thermoplastique,
B) 15 à 60 parties en poids d'au moins une fibre de verre,
C) 0,5 à 15 parties en poids d'au moins une charge lamellaire,
D) 5 à 15 parties en poids d'au moins un composé phosphoré de formule générale (I) 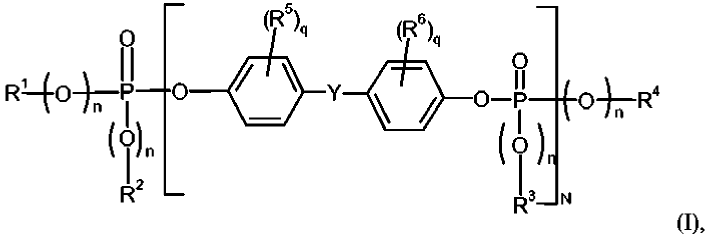 dans laquelle
R¹, R², R³ et R⁴, indépendamment les uns des autres, désignent alkyle en C₁ à C₈, cycloalkyle en C₅ à C₆ substitué par alkyle, aryle en C₆ à C₁₀ et/ou aralkyle en C₇ à C₁₂,
n désigne, indépendamment les uns des autres, 0 ou 1,
q désigne, indépendamment les uns des autres, 0, 1, 2, 3 ou 4,
N est un nombre de 0,1 à 30,
R⁵ et R⁶ désignent, indépendamment l'un de l'autre, alkyle en C₁ à C₄, et
Y est alkylidène en C₁ à C₇, alkylène en C₁ à C₇, cycloalkylène en C₅ à C₁₂, cycloalkylidène en C₅ à C₁₂, -O-, -S-, -SO-, SO₂ ou -CO-,
E) 0,5 à 4,5 parties en poids d'au moins un copolymère éthylène-(méth)acrylate d'alkyle, qui a un indice de fluidité d'au moins 2,5 g/10 min déterminé selon l'ASTM D1238 pour 190 °C et 2,16 kg,
dans laquelle la somme des parties en poids des composants A) à E) est de 100 parties en poids et dans laquelle aucun modificateur de résistance aux chocs supplémentaire n'est présent et
à condition que la composition comprenne au moins une charge lamellaire où ≥ 4,0 parties en poids de l'au moins un copolymère d'éthylène-(méth)acrylate d'alkyle sont présentes.

2. Composition de polycarbonate selon la revendication 1, dans laquelle 5 à 10,5 parties en poids de charge lamellaire sont présentes.

3. Composition de polycarbonate selon la revendication 1 ou la revendication 2, dans laquelle la charge lamellaire est le talc.

4. Composition de polycarbonate selon l'une des revendications précédentes, dans laquelle les masses molaires m moyennes sont de 20 000 g/mol à 32 000 g/mol, déterminées selon la description.

5. Composition de polycarbonate selon l'une des revendications précédentes, dans laquelle, dans la formule (I), N est de 0,7 à 5.

6. Composition de polycarbonate selon l'une des revendications précédentes, dans laquelle, pour le composant E), l'indice de fluidité (MFR) est dans la plage de 3,0 à 8,0 g/10 min, déterminé selon l'ASTM D1238 pour 190 °C et 2,16 kg.

7. Composition de polycarbonate selon l'une des revendications précédentes, dans laquelle, lorsque plus de 20 parties en poids de fibres de verre sont utilisées, sur la base du poids total de la composition de polycarbonate étant 100 parties en poids, les fibres de verre sont des fibres plates.

8. Composition de polycarbonate selon l'une des revendications précédentes, dans laquelle l'au moins une fibre de verre est utilisée en combinaison avec le composant C) comprenant du talc.

9. Composition de polycarbonate selon la revendication 1 comprenant :
A) 10 à 78 parties en poids d'au moins un polycarbonate aromatique thermoplastique,
B) 15 à 60 parties en poids d'au moins une fibre de verre,
C) 0,5 à 15 parties en poids d'au moins une charge lamellaire,
D) 5 à 15 parties en poids d'au moins un composé phosphoré de formule générale (I) 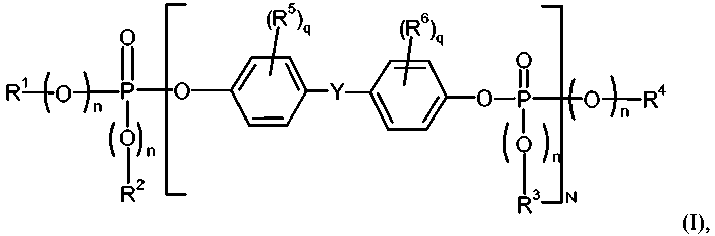 dans laquelle
R¹, R², R³ et R⁴, indépendamment les uns des autres, désignent alkyle en C₁ à C₈, cycloalkyle en C₅ à C₆ substitué par alkyle, aryle en C₆ à C₁₀ et/ou aralkyle en C₇ à C₁₂,
n désigne, indépendamment les uns des autres, 0 ou 1,
q désigne, indépendamment les uns des autres, 0, 1, 2, 3 ou 4,
N est un nombre de 0,1 à 30,
R⁵ et R⁶ désignent, indépendamment l'un de l'autre, alkyle en C₁ à C₄, et
Y est alkylidène en C₁ à C₇, alkylène en C₁ à C₇, cycloalkylène en C₅ à C₁₂, cycloalkylidène en C₅ à C₁₂, -O-, -S-, -SO-, SO₂ ou -CO-,
E) 0,5 à < 4 parties en poids d'au moins un copolymère éthylène-(méth)acrylate d'alkyle, qui a un indice de fluidité d'au moins 2,5 g/10 min déterminé selon l'ASTM D1238 pour 190 °C et 2,16 kg,
dans laquelle la somme des parties en poids des composants A) à E) est de 100 parties en poids et dans laquelle aucun modificateur de résistance aux chocs supplémentaire n'est présent.

10. Composition de polycarbonate selon la revendication 1 comprenant :
A) 10 à 78 parties en poids d'au moins un polycarbonate aromatique thermoplastique,
B) 15 à 60 parties en poids d'au moins une fibre de verre,
C) 5 à 10,5 parties en poids de talc,
D) 5 à 15 parties en poids d'au moins un composé phosphoré de formule générale (I) 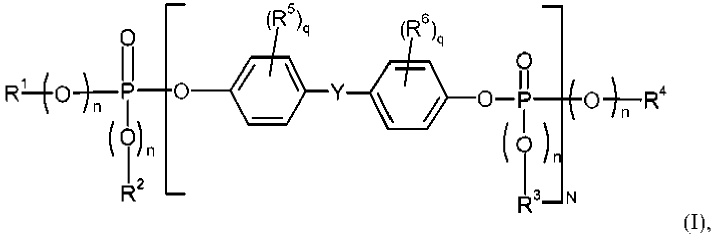 dans laquelle
R¹, R², R³ et R⁴, indépendamment les uns des autres, désignent alkyle en C₁ à C₈, cycloalkyle en C₅ à C₆ substitué par alkyle, aryle en C₆ à C₁₀ et/ou aralkyle en C₇ à C₁₂,
n désigne, indépendamment les uns des autres, 0 ou 1,
q désigne, indépendamment les uns des autres, 0, 1, 2, 3 ou 4,
N est un nombre de 0,1 à 30,
R⁵ et R⁶ désignent, indépendamment l'un de l'autre, alkyle en C₁ à C₄, et
Y est alkylidène en C₁ à C₇, alkylène en C₁ à C₇, cycloalkylène en C₅ à C₁₂, cycloalkylidène en C₅ à C₁₂, -O-, -S-, -SO-, SO₂ ou -CO-,
E) ≥ 4 à 4,5 parties en poids d'au moins un copolymère éthylène-(méth)acrylate d'alkyle, qui a un indice de fluidité d'au moins 2,5 g/10 min déterminé selon l'ASTM D1238 pour 190 °C et 2,16 kg,
dans laquelle la somme des parties en poids des composants A) à E) est de 100 parties en poids.

11. Composition de polycarbonate selon la revendication 10, dans laquelle aucun modificateur de résistance aux chocs supplémentaire n'est présent.

12. Composition de polycarbonate selon l'une des revendications précédentes, dans laquelle le composant D est 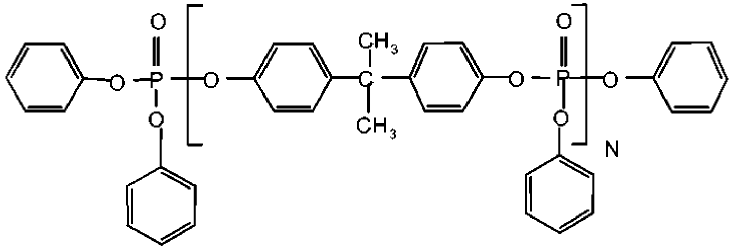 avec N = 1,1.

13. Utilisation de la composition de polycarbonate selon l'une des revendications précédentes en tant que composition de moulage pour préparer des composants à paroi mince ayant une épaisseur de paroi ≤ 1,00 mm dans des applications de technologie électrique, électronique et informatique.

14. Utilisation de la composition de polycarbonate selon la revendication 13, dans laquelle l'épaisseur de paroi des composants est à chaque point ou au moins partiellement ≤ 0,75 mm.

15. Moulage comprenant une composition de polycarbonate selon l'une des revendications précédentes.
